# EUROPEAN PATENT SPECIFICATION

(11) **EP 2 548 677 B1**
(45) Date of publication and mention of the grant of the patent: **04.01.2017**
(21) Application number: 12176688.5
(22) Date of filing: 17.07.2012
(51) Int. Cl.: B22F 1/00, C22C 1/04, B23K 35/02, C23G 1/24

(54) **Solder powder-cleaning agent and method for making solder powder**
Lötpulverreinigungsmittel und Verfahren zum Herstellen von Lötpulver
Agent de nettoyage de poudre de soudage et procédé de fabrication de poudre de soudure

(30) Priority: 19.07.2011 JP 2011158159
(43) Date of publication of application: 23.01.2013
(73) Proprietor: Mitsubishi Materials Corporation, Chiyoda-ku Tokyo (JP)
(72) Inventor: Ishikawa, Masayuki, Hyogo-ken (JP); Uno, Hironori, Hyogo-ken (JP)
(74) Representative: Hoffmann Eitle

(56) References cited:
- EP-A1- 0 567 015
- EP-A1- 1 245 315
- JP-A- H01 188 311

## Description

### BACKGROUND OF THE INVENTION

### Field of the Invention

The present invention relates to a method for making solder powder.

### Description of Related Art

As conventional methods for making solder powders, a gas atomization method has been the mainstream. For the powders formed using this method, the concentration of a gas portion, for example, oxygen concentration and carbon concentration, in powders is low and, in particular, no particular problems occur with regard to cleaning of the powders after the powder formation.

However, recently, methods for making solder powders such as a water atomization method, a preparation-in-oil method and a wet reduction method have become diversified, in addition to the gas atomization method, with demands for smaller particle size and higher yields (see Japanese Unexamined Patent Application, First publication No. H2-118003, Japanese Unexamined Patent Application, First publication No. 2000-328112, Japanese Unexamined Patent Application, First publication No. 2004-18890, PCT International Publication No. WO2006/95417, Japanese Unexamined Patent Application, First publication No. H3-230894, Japanese Unexamined Patent Application, First publication No. 2003-166007, and Japanese Unexamined Patent Application, First publication No. 2003-268418). In particular, for powders made using oil, the powders are extracted by introducing a cleaning step after the powders are formed as disclosed in Japanese Unexamined Patent Application, First publication No. H3-230894, Japanese Unexamined Patent Application, First publication No. 2003-166007, and Japanese Unexamined Patent Application, First publication No. 268418.

When solder powders made from this preparation-in-oil method or the like are cleaned, a Freon series substance, methyl chloroform or the like, which are environmentally unfriendly substances, have been used as a cleaning agent in order to improve the cleanliness of a solder surface. However, recently, there has been a movement toward refraining from the use of a environmentally unfriendly substances such as a Freon series substance, methyl chloroform or the like in consideration of the environment, and highly volatile and highly soluble organic solvents have been used as alternatives.

For example, Japanese Unexamined Patent Application, First publication No. H3-230894 discloses cleaning agents including a petroleum-based medium such as gasoline, kerosene or the like, an aromatic-based medium such as benzene, toluene, xylene, or the like, a chlorine-based medium such as trichloroethylene, perchloroethylene, chlorothene, carbon tetrachloride or the like, a hydrocarbon-based medium such as methanol, ethanol, isopropanol or the like, or the like. Japanese Unexamined Patent Application, First publication No. 2003-166007 discloses a method in which a cleaning agent such as ethyl acetate is used and powders are immersed therein and are vacuum-dried after repeating decantation. Also, Japanese Unexamined Patent Application, First publication No. 2003-166007 discloses acetone, methyl ethyl ketone, benzene, toluene, xylene, ethyl acetate, butyl acetate, cyclohexane or the like, in addition to semi-aqueous-based cleaning agents of a glycol ether type, a water-soluble solvent type, other solvent types, a terpene type, a petroleum-based solvent type, non-aqueous-based cleaning agents of a hydrocarbon-based cleaning agent (normal paraffin-based, isoparaffin-based, naphthene-based, or aromatic-based), alcohol-based cleaning agents (isopropyl alcohol, ethanol or the like), silicone-based cleaning agents, fluorine-based cleaning agents, chlorine-based cleaning agents, bromine-based cleaning agents or the like.

EP 0 567 015 A1 describes a method of cleaning an oil-deposited material, which comprises cleaning a material having oils deposited on the surface thereof with a cleaning agent comprising 25 - 90% by weight of at least one of the compounds selected from the group consisting of pyrolidones, γ-butyrolactone and N,N-dimethylacetamide, and 10 - 75% by weight of water.

JP H 01 188 311 A describes a cleaning agent containing pyrolidone and/or a derivative thereof in an amount of 20% by weight or more. The cleaning agent may be used for cleaning molds and is especially suitable for removing the residual contamination in the mold such as various kinds of rubbers, plastics and molding sand.

### SUMMARY OF THE INVENTION

### Problems to be Solved by the Invention

However, cleaning using organic solvents causes problems in that the cleanliness of a powder is not improved. In a preparation-in-oil method, oil is adhered to the powder surface since powders are made at a temperature higher than or equal to the melting point of solder; therefore, the oil component, especially carbon, tends to remain even after cleaning. Also, the tendency is even greater when the particle size becomes smaller since the specific surface area of the powder increases. Therefore, an improvement of cleanliness by reinforcing a powder-cleaning step has been required.

In the patent documents described above, descriptions with regard to detailed conditions of a cleaning step were insufficient and there were cases in which the cleaning agents described above did not have a sufficient cleaning effect and paste viscosity after solder powders and flux were kneaded and the thixotropic index decreased. Furthermore, an aggregating property of powders was poor during reflow and had adverse effects on the variations in bump height or voids when applied to a flip-chip method.

The present invention has been made in view of the above-described problems and an object of the invention is to make solder powders with high cleanliness by the preparation-in-oil method or the like using a cleaning agent which is suitable for powders formed by preparation using liquid methods such as a preparation-in-oil method.

### Means for Solving the Problem

In solder powders after the powders are formed by the preparation-in-oil method or the like, oil adheres, and if cleaning is insufficient, carbon remains on the surface as oil cake. The carbon decreases paste viscosity and thixotropic index and hinders an aggregating property of the powder when printing the paste to a desired place and reflowing, therefore affecting the variation in bump heights and the occurrence of voids. The inventors have found that the use of a cleaning agents including at least one of components selected from a group consisting of N-methylpyrrolidone, 2-pyrrolidone, dimethylsulfoxide, propylene carbonate, sulfolane, γ-butyrolactone is effective in removing this carbon when the solder powders are cleaned. Also, the inventors have confirmed that, if necessary, in the cleaning step, a cleaning effect may be further enhanced by increasing the temperature of the cleaning agent or applying ultrasonic waves.

According to the present invention, a method for making solder powder is provided including a powder-forming step in which the solder powder is formed in liquid and a cleaning step in which the solder powder obtained from the powder-forming step is cleaned using a solder powder-cleaning agent including at least one of components selected from a group consisting of N-methylpyrrolidone, 2-pyrrolidone, dimethylsulfoxide, propylene carbonate, sulfolane, and γ-butyrolactone.

By using solder powder-cleaning agent in cleaning the solder powders formed by the preparation-in-oil method or the like, the carbon remaining on a surface may be effectively removed and an aggregating property of the powder is improved when printing the paste to a desired place and reflowing; therefore solder powders with little variation in bump heights and little occurrence of voids may be obtained.

The solder powder-cleaning agent used in the method according to the present invention may further include at least one of a stabilizing agent and an additive in order to further enhance the detergency. As the additive, a non-ionic surfactant such as sorbitan fatty acid ester, glycerin fatty acid ester, polyoxyethylene fatty acid amide, polyoxyethylene lauryl ether, polyoxyethylene monostearate, polyoxyethylene cetyl ether, polyoxyethylene-polyoxypropylene block polymer or the like may be included. In addition, an anionic surfactant or a cationic surfactant may be added as necessary. Also, as the stabilizing agent, hydrocarbons, alcohols, glycols, aminoethanol, benzotriazoles, ethers, esters, amines, acetals, ketones, or fatty acids may be included.

According to the method for making this solder powder, in the cleaning step, a stir cleaning process in which a cleaning liquid including the solder powder-cleaning agent is stirred at 100 to 500 rpm for 5 to 10 minutes and a supernatant liquid-removing process in which the supernatant liquid formed by the mixture being allowed to stand after the stir cleaning process is removed are repeated several times and then, the remaining slurry is immersed in rinsing cleaning liquid, and after the supernatant liquid formed by the mixture being allowed to stand is removed, the resultant is dried and becomes solder powder.

According to the method for making this solder powder, in the cleaning step, an ultrasonic cleaning process in which ultrasonic waves of 25 to 40 kHz and 300 to 600 W are applied to a cleaning liquid including the solder powder-cleaning agent for 5 to 10 minutes and a supernatant liquid-removing process in which the supernatant liquid formed by the mixture being allowed to stand after the ultrasonic cleaning process is removed are repeated several times and then, the remaining slurry is immersed in rinsing cleaning liquid, and after the supernatant liquid formed by the mixture being allowed to stand is removed, the resultant is dried and becomes solder powder.

According to the method for making this solder powder, in the cleaning step, a process in which an ultrasonic cleaning process in which ultrasonic waves of 25 to 40 kHz and 300 to 600 W are applied to a cleaning liquid for 5 to 10 minutes and a stir cleaning process in which a cleaning liquid including the solder powder-cleaning agent is stirred at 100 to 500 rpm for 5 to 10 minutes are performed either consecutively in certain orders or simultaneously, and a supernatant liquid-removing process in which the supernatant liquid formed by the mixture being allowed to stand after the processes is removed are repeated several times and then, the remaining slurry is immersed in rinsing cleaning liquid, and after the supernatant liquid formed by the mixture being allowed to stand is removed, the resultant is dried and becomes solder powder.

If the solder powder-cleaning agent described above is used, a cleaning effect is enhanced by adding the ultrasonic cleaning process or the stirring process; therefore, solder powders with higher cleanliness may be made.

### Effects of the Invention

According to the present invention, the carbon adhered to the surface of solder powder formed using a preparation-in-liquid method or the like may be effectively removed, and the cleanliness is enhanced; therefore, after the powder is turned into paste, an aggregating property of the powders is improved when printing to a desired place and reflowing, and therefore solder powders with little variation in bump heights and little occurrence of voids may be obtained.

### DETAILED DESCRIPTION OF THE INVENTION

Hereinafter, one embodiment of the present invention will be described.

The method for making solder powder includes a powder-forming step in which solder powders are formed in liquid such as oil and a cleaning step in which the solder powders obtained from the powder-forming step are cleaned using solder powder-cleaning agent (hereinafter referred to as "cleaning agent").

The powder-forming step is a step in which the solder powder is made using the preparation-in-liquid method, in particular, the preparation-in-oil method. As the oil, both vegetable oil and animal oil may be used; however, vegetable oil such as castor oil or soybean oil is suitable. Specific preparation-in-oil methods are not particularly limited and a method is used in which the solder powder is melted by the oil being maintained at a temperature higher than the melting point of the solder powder, and after being stirred and dispersed, the solder powder is separated by settling or the like. As the solder powder, Pb-Sn alloy solder powders, lead-free Sn group solder powders, or the like with an average particle diameter of 1 to 30 µm may be obtained.

In the cleaning step, the cleaning agent containing at least one of components selected from a group consisting of N-methylpyrrolidone, 2-pyrrolidone, dimethylsulfoxide, propylene carbonate, sulfolane, and γ-butyrolactone, preferably at 85 to 100 mass% and more preferably 90 to 100 mass%, may be used.

At least one of a stabilizing agent and an additive may be further added, preferably at 0.1 to 15 mass% and more preferably 0.1 to 10 mass%, to a further cleaning liquid containing at least one of components selected from a group consisting of N-methylpyrrolidone, 2-pyrrolidone, dimethylsulfoxide, propylene carbonate, sulfolane, and γ-butyrolactone in order to enhance the detergency. As the additive, a non-ionic surfactant such as sorbitan fatty acid ester, glycerin fatty acid ester, polyoxyethylene fatty acid amide, polyoxyethylene lauryl ether, polyoxyethylene monostearate, polyoxyethylene cetyl ether, polyoxyethylene-polyoxypropylene block polymer or the like may be included. Also, an anionic surfactant or a cationic surfactant may be added as necessary. Also, as the stabilizing agent, hydrocarbons, alcohols, glycols, aminoethanol, benzotriazoles, ethers, esters, amines, acetals, ketones, fatty acids or the like may be included. As the additive, in particular, polyoxyethylene lauryl ether, polyoxyethylene monostearate, or polyoxyethylene cetyl ether is suitable.

As for the specific cleaning manner, the cleaning liquid containing at least one of components selected from a group consisting of N-methylpyrrolidone, 2-pyrrolidone, dimethylsulfoxide, propylene carbonate, sulfolane, and γ-butyrolactone is prepared, the solder powder obtained from the powder-forming step is immersed in the cleaning liquid, after the stir cleaning process and the ultrasonic cleaning process are performed consecutively, the supernatant liquid-removing process is performed in which the mixture is allowed to stand and the supernatant liquid is removed, and after the cleaning liquid is replenished, as the stir cleaning process and the ultrasonic cleaning process are performed again, and the supernatant liquid is removed, each process of the stir cleaning process, ultrasonic cleaning process, and the supernatant liquid-removing process are repeated several times as the cleaning liquid is replenished, and at the end, the solder powder after the rinsing cleaning process is dried.

The stir cleaning process is a process in which the cleaning is carried out by stirring the cleaning liquid at 100 to 500 rpm for 5 to 10 minutes and the ultrasonic cleaning process is a process in which the cleaning is carried out by applying ultrasonic waves of 25 to 40 kHz and 300 to 600 W to the cleaning liquid for 5 to 10 minutes. The stir cleaning process and ultrasonic cleaning processes may be performed either consecutively or simultaneously. Alternatively only the ultrasonic cleaning process may be performed.

The supernatant liquid-removing process is a process in which the supernatant liquid is removed after allowing the solder powder to settle in the cleaning agent.

The series of processes of the stir cleaning process, the ultrasonic cleaning process, and the supernatant liquid-removing process is more preferably repeated several times or more. Also, the temperature of the cleaning liquid is more preferably adjusted to 50 to 80°C, and more preferably adjusted to 60 to 80 °C.

In a rinsing cleaning process, the slurry containing the solder powder obtained in this manner is immersed in a rinsing cleaning liquid, allowed to stand after the stirring and the supernatant liquid is removed. As the rinsing cleaning liquid, ethyl alcohol, isopropyl alcohol, toluene, ethyl acetate, butyl acetate, acetone, methyl ethyl ketone, benzene, xylene, cyclohexane or the like may be included. This rinsing cleaning process may be repeated several times as the rinsing cleaning liquid is replenished as necessary.

As the drying process after the rinsing cleaning process, vacuum drying is effective and the drying may be carried out under a vacuum atmosphere at, for example, 60°C for about 10 minutes.

In the solder powder made in this manner, the adhered amount of the carbon on the surface may be suppressed to, for example, less than or equal to 350 ppm in the case of solid powders with an average particle diameter of 6 µm, and therefore, a surface with high cleanliness may be obtained, and also, an aggregating property during the reflow is excellent since paste viscosity and thixotropic index after the solder powder and the flux are kneaded may be maintained at a high level. When this solder powder is applied to a flip-chip method, high quality solder joints may be obtained since variation in the bump heights or occurrence of voids is suppressed.

### EXAMPLES

### <Example 1 >

Solder powder was formed in oil (castor oil) and solder powder composed of Sn-3 mass% Ag-0.5 mass% Cu with particle diameters of 2 to 12 µm (average diameter of 6 µm) was obtained. The powder was cleaned in the cleaning step. As the cleaning agent, N-methylpyrrolidone was used. The solder powder was immersed in this cleaning agent at room temperature and the mixture was stirred at 400 rpm for 5 minutes using a stirrer. After stirring, the mixture was allowed to stand, the powder was allowed to settle, then the supernatant liquid was removed, and again, the cleaning agent was introduced and the powder was immersed. This step was repeated 5 times.

At the end, after the supernatant liquid was removed, sufficient toluene was added for all the slurry containing the solder powder to be immersed and the mixture was stirred at 300 rpm for 5 minutes using a stirrer, allowed to stand, and after the powder was allowed to settle, the supernatant liquid was removed. This was repeated 3 times and the powder was obtained by drying the slurry containing the solder powder at the end.

### <Example 2>

Solder powder was formed in oil (castor oil) and solder powder composed of Sn-3 mass% Ag-0.5 mass% Cu with particle diameters of 2 to 12 µm (average diameter of 6 µm) was obtained. The powder was cleaned in the cleaning step. As the cleaning agent, N-methylpyrrolidone was used. This cleaning agent was warmed to 70°C, solder powder was immersed, and the mixture was stirred at 400 rpm for 5 minutes using a stirrer. After stirring, the mixture was allowed to stand, the powder was allowed to settle, then the supernatant liquid was removed, and again, the cleaning agent was introduced and the powder was immersed. This step was repeated 5 times.

At the end, after the supernatant liquid was removed, sufficient toluene was added for all the slurry containing the solder powder to be immersed and the mixture was stirred at 300 rpm for 5 minutes using a stirrer, allowed to stand, and after the powder was allowed to settle, the supernatant liquid was removed. This was repeated 3 times and the powder was obtained by drying the slurry containing the solder powder at the end.

### <Example 3>

Solder powder was formed in oil (castor oil) and solder powder composed of Sn-3 mass% Ag-0.5 mass% Cu with particle diameters of 2 to 12 µm (average diameter of 6 µm) was obtained. The powder was cleaned in the cleaning step. As the cleaning agent, N-methylpyrrolidone was used. This cleaning agent was warmed to 70°C, solder powder was immersed, and the cleaning was carried out by applying ultrasonic waves of 40 kHz and 600 W for 5 minutes. After that, the mixture was allowed to stand, the powder was allowed to settle, then the supernatant liquid was removed, and again, the cleaning agent was introduced and the powder was immersed. This step was repeated 5 times.

At the end, after the supernatant liquid was removed, sufficient toluene was added for all the slurry containing the solder powder to be immersed and the mixture was stirred at 300 rpm for 5 minutes using a stirrer, allowed to stand, and after the powder was allowed to settle, the supernatant liquid was removed. This was repeated 3 times and the powder was obtained by drying the slurry containing the solder powder at the end.

### <Example 4>

Solder powder was formed in oil (castor oil) and solder powder composed of Sn-3 mass% Ag-0.5 mass% Cu with particle diameters of 2 to 12 µm (average diameter of 6 µm) was obtained. The powder was cleaned in the cleaning step. As the cleaning agent, N-methylpyrrolidone was used. This cleaning agent was warmed to 70°C, solder powder was immersed, and the cleaning was carried out by applying ultrasonic waves of 40 kHz and 600 W for 5 minutes and then the mixture was stirred at 400 rpm for 5 minutes using a stirrer. After the stirring, the mixture was allowed to stand, the powder was allowed to settle, then the supernatant liquid was removed, and again, the cleaning agent was introduced and the powder was immersed. This step was repeated 5 times.

At the end, after the supernatant liquid was removed, sufficient toluene was added for all the slurry containing the solder powder to be immersed and the mixture was stirred at 300 rpm for 5 minutes using a stirrer, allowed to stand, and after the powder was allowed to settle, the supernatant liquid was removed. This was repeated 3 times and the powder was obtained by drying the slurry containing the solder powder at the end.

### <Example 5>

Solder powder was formed in oil (castor oil) and solder powder composed of Sn-3 mass% Ag-0.5 mass% Cu with particle diameters of 2 to 12 µm (average diameter of 6 µm) was obtained. The powder was cleaned in the cleaning step. As the cleaning agent, a mixed solution of N-methylpyrrolidone of 90 mass%, polyoxyethylene (5 mol adduct) monostearate of 5 mass%, and polyoxyethylene (20 mol adduct) cetyl ether of 5 mass% was used. This cleaning agent was warmed to 70°C, solder powder was immersed, and the cleaning was carried out by applying ultrasonic waves of 40 kHz and 600 W for 5 minutes and then the mixture was stirred at 400 rpm for 5 minutes using a stirrer. After the stirring, the mixture was allowed to stand, the powder was allowed to settle, then the supernatant liquid was removed, and again, the cleaning agent was introduced and the powder was immersed. This step was repeated 5 times.

At the end, after the supernatant liquid was removed, sufficient toluene was added for all the slurry containing the solder powder to be immersed and the mixture was stirred at 300 rpm for 5 minutes using a stirrer, allowed to stand, and after the powder was allowed to settle, the supernatant liquid was removed. This was repeated 3 times and the powder was obtained by drying the slurry containing the solder powder at the end.

### <Example 6>

Solder powder was formed in oil (soybean oil) and solder powder composed of Pb-63 mass% Sn with particle diameters of 2 to 12 µm (average diameter of 6 µm) was obtained. The powder was cleaned in the cleaning step. As the cleaning agent, 2-pyrrolidone was used. This cleaning agent was warmed to 60°C, solder powder was immersed, and the mixture was stirred at 300 rpm for 5 minutes using a stirrer. After that, the mixture was allowed to stand, the powder was allowed to settle, then the supernatant liquid was removed, and again, the cleaning agent was introduced and the powder was immersed. This step was repeated 5 times.

At the end, after the supernatant liquid was removed, sufficient acetone was added for all the slurry containing the solder powder to be immersed and the mixture was stirred at 300 rpm for 5 minutes using a stirrer, allowed to stand, and after the powder was allowed to settle, the supernatant liquid was removed. This was repeated 3 times and the powder was obtained by drying the slurry containing the solder powder at the end.

### <Example 7>

Solder powder was formed in oil (soybean oil) and solder powder composed of Pb-63 mass% Sn with particle diameters of 2 to 12 µm (average diameter of 6 µm) was obtained. The powder was cleaned in the cleaning step. As the cleaning agent, 2-pyrrolidone was used. This cleaning agent was warmed to 60°C, solder powder was immersed, and the cleaning was carried out by applying ultrasonic waves of 30 kHz and 600 W for 5 minutes. After that, the mixture was allowed to stand, the powder was allowed to settle, then the supernatant liquid was removed, and again, the cleaning agent was introduced and the powder was immersed. This step was repeated 5 times.

At the end, after the supernatant liquid was removed, sufficient acetone was added for all the slurry containing the solder powder to be immersed and the mixture was stirred at 300 rpm for 5 minutes using a stirrer, allowed to stand, and after the powder was allowed to settle, the supernatant liquid was removed. This was repeated 3 times and the powder was obtained by drying the slurry containing the solder powder at the end.

### <Example 8>

Solder powder was formed in oil (soybean oil) and solder powder composed of Pb-63 mass% Sn with particle diameters of 2 to 12 µm (average diameter of 6 µm) was obtained. The powder was cleaned in the cleaning step. As the cleaning agent, 2-pyrrolidone was used. This cleaning agent was warmed to 60°C, solder powder was immersed, and the cleaning was carried out by applying ultrasonic waves of 30 kHz and 600 W for 5 minutes and then the mixture was stirred at 300 rpm for 5 minutes using a stirrer. After stirring, the mixture was allowed to stand, the powder was allowed to settle, then the supernatant liquid was removed, and again, the cleaning agent was introduced and the powder was immersed. This step was repeated 5 times.

At the end, after the supernatant liquid was removed, sufficient acetone was added for all the slurry containing the solder powder to be immersed and the mixture was stirred at 300 rpm for 5 minutes using a stirrer, allowed to stand, and after the powder was allowed to settle, the supernatant liquid was removed. This was repeated 3 times and the powder was obtained by drying the slurry containing the solder powder at the end.

### <Example 9>

Solder powder was formed in oil (castor oil) and solder powder composed of Sn-3 mass% Ag-0.5 mass% Cu with particle diameters of 2 to 12 µm (average diameter of 6 µm) was obtained. The powder was cleaned in the cleaning step. As the cleaning agent, dimethylsulfoxide was used. This cleaning agent was warmed to 70°C, solder powder was immersed, and the mixture was stirred at 400 rpm for 5 minutes using a stirrer. After stirring, the mixture was allowed to stand, the powder was allowed to settle, then the supernatant liquid was removed, and again, the cleaning agent was introduced and the powder was immersed. This step was repeated 5 times.

At the end, after the supernatant liquid was removed, sufficient toluene was added for all the slurry containing the solder powder to be immersed and the mixture was stirred at 300 rpm for 5 minutes using a stirrer, allowed to stand, and after the powder was allowed to settle, the supernatant liquid was removed. This was repeated 3 times and the powder was obtained by drying the slurry containing the solder powder at the end.

### <Example 10>

Solder powder was formed in oil (soybean oil) and solder powder composed of Pb-63 mass% Sn with particle diameters of 2 to 12 µm (average diameter of 6 µm) was obtained. The powder was cleaned in the cleaning step. As the cleaning agent, propylene carbonate was used. This cleaning agent was warmed to 60°C, solder powder was immersed, and the mixture was stirred at 300 rpm for 5 minutes using a stirrer. After stirring, the mixture was allowed to stand, the powder was allowed to settle, then the supernatant liquid was removed, and again, the cleaning agent was introduced and the powder was immersed. This step was repeated 5 times.

At the end, after the supernatant liquid was removed, sufficient acetone was added for all the slurry containing the solder powder to be immersed and the mixture was stirred at 300 rpm for 5 minutes using a stirrer, allowed to stand, and after the powder was allowed to settle, the supernatant liquid was removed. This was repeated 3 times and the powder was obtained by drying the slurry containing the solder powder at the end.

### <Example 11 >

Solder powder was formed in oil (soybean oil) and solder powder composed of Pb-63 mass% Sn with particle diameters of 2 to 12 µm (average diameter of 6 µm) was obtained. The powder was cleaned in the cleaning step. As the cleaning agent, sulfolane was used. This cleaning agent was warmed to 60°C, solder powder was immersed, and the mixture was stirred at 300 rpm for 5 minutes using a stirrer. After stirring, the mixture was allowed to stand, the powder was allowed to settle, then the supernatant liquid was removed, and again, the cleaning agent was introduced and the powder was immersed. This step was repeated 5 times.

At the end, after the supernatant liquid was removed, sufficient acetone was added for all the slurry containing the solder powder to be immersed and the mixture was stirred at 300 rpm for 5 minutes using a stirrer, allowed to stand, and after the powder was allowed to settle, the supernatant liquid was removed. This was repeated 3 times and the powder was obtained by drying the slurry containing the solder powder at the end.

### <Example 12>

Solder powder was formed in oil (soybean oil) and solder powder composed of Pb-63 mass% Sn with particle diameters of 2 to 12 µm (average diameter of 6 µm) was obtained. The powder was cleaned in the cleaning step. As the cleaning agent, γ-butyrolactone was used. This cleaning agent was warmed to 60°C, solder powder was immersed, and the mixture was stirred at 300 rpm for 5 minutes using a stirrer. After stirring, the mixture was allowed to stand, the powder was allowed to settle, then the supernatant liquid was removed, and again, the cleaning agent was introduced and the powder was immersed. This step was repeated 5 times.

At the end, after the supernatant liquid was removed, sufficient acetone was added for all the slurry containing the solder powder to be immersed and the mixture was stirred at 300 rpm for 5 minutes using a stirrer, allowed to stand, and after the powder was allowed to settle, the supernatant liquid was removed. This was repeated 3 times and the powder was obtained by drying the slurry containing the solder powder at the end.

### <Comparative Example 1 >

Solder powder was formed in oil (castor oil) and solder powder composed of Sn-3 mass% Ag-0.5 mass% Cu with particle diameters of 2 to 12 µm (average diameter of 6 µm) was obtained. The powder was cleaned in the cleaning step. As the cleaning agent, toluene was used. The solder powder was immersed in this cleaning agent at room temperature and the mixture was stirred at 400 rpm for 5 minutes using a stirrer. After stirring, the mixture was allowed to stand, the powder was allowed to settle, then the supernatant liquid was removed, and again, the cleaning agent was introduced and the powder was immersed. This step was repeated 5 times.

At the end, after the supernatant liquid was removed, sufficient toluene was added for all the slurry containing the solder powder to be immersed and the mixture was stirred at 300 rpm for 5 minutes using a stirrer, allowed to stand, and after the powder was allowed to settle, the supernatant liquid was removed. This was repeated 3 times and the powder was obtained by drying the slurry containing the solder powder at the end.

### <Comparative Example 2>

Solder powder was formed in oil (castor oil) and solder powder composed of Sn-3 mass% Ag-0.5 mass% Cu with particle diameters of 2 to 12 µm (average diameter of 6 µm) was obtained. The powder was cleaned in the cleaning step. As the cleaning agent, toluene was used. This cleaning agent was warmed to 70°C, solder powder was immersed, and the mixture was stirred at 400 rpm for 5 minutes using a stirrer. After stirring, the mixture was allowed to stand, the powder was allowed to settle, then the supernatant liquid was removed, and again, the cleaning agent was introduced and the powder was immersed. This step was repeated 5 times.

At the end, after the supernatant liquid was removed, sufficient toluene was added for all the slurry containing the solder powder to be immersed and the mixture was stirred at 300 rpm for 5 minutes using a stirrer, allowed to stand, and after the powder was allowed to settle, the supernatant liquid was removed. This was repeated 3 times and the powder was obtained by drying the slurry containing the solder powder at the end.

### <Comparative Example 3>

Solder powder was formed in oil (castor oil) and solder powder composed of Sn-3 mass% Ag-0.5 mass% Cu with particle diameters of 2 to 12 µm (average diameter of 6 µm) was obtained. The powder was cleaned in the cleaning step. As the cleaning agent, toluene was used. This cleaning agent was warmed to 70°C, solder powder was immersed, and the cleaning was carried out by applying ultrasonic waves of 40 kHz and 600 W for 5 minutes and then the mixture was stirred at 400 rpm for 5 minutes using a stirrer. After the stirring, the mixture was allowed to stand, the powder was allowed to settle, then the supernatant liquid was removed, and again, the cleaning agent was introduced and the powder was immersed. This step was repeated 8 times. At the end, the slurry containing the solder powder was dried and the powder was obtained.

### <Comparative Example 4>

Solder powder was formed in oil (soybean oil) and solder powder composed of Pb-63 mass% Sn with particle diameters of 2 to 12 µm (average diameter of 6 µm) was obtained. The powder was cleaned in the cleaning step. As the cleaning agent, ethyl acetate was used. This cleaning agent was warmed to 55°C, solder powder was immersed, and the cleaning was carried out by applying ultrasonic waves of 30 kHz and 600 W for 5 minutes and then the mixture was stirred at 300 rpm for 5 minutes using a stirrer. After stirring, the mixture was allowed to stand, the powder was allowed to settle, then the supernatant liquid was removed, and again, the cleaning agent was introduced and the powder was immersed. This step was repeated 5 times.

At the end, after the supernatant liquid was removed, sufficient ethyl acetate was added for all the slurry containing the solder powder to be immersed and the mixture was stirred at 300 rpm for 5 minutes using a stirrer, allowed to stand, and after the powder was allowed to settle, the supernatant liquid was removed. This was repeated 3 times and the powder was obtained by drying the slurry containing the solder powder at the end.

The solder powders, their particle diameters, the cleaning agents, the cleaning methods, and the cleaning temperatures used in each of Examples and Comparative Examples are shown in Table 1.

**[Table 1]**

| | Solder Powder | Particle Diameter (µm) | Cleaning Agent | Stirring/Ultras onic Waves | Temperature (°C) |
|---|---|---|---|---|---|
| Example 1 | Sn-3%Ag-0.5%Cu | 2∼12 | N-Methylpyrrolidone | Stirring | Room Temperature |
| Example 2 | Sn-3%Ag-0.5%Cu | 2∼12 | N-Methylpyrrolidone | Stirring | 70 |
| Example 3 | Sn-3%Ag-0.5%Cu | 2∼12 | N-Methylpyrrolidone | Ultrasonic Waves | 70 |
| Example 4 | Sn-3%Ag-0.5%Cu | 2∼12 | N-Methylpyrrolidone | Ultrasonic Waves + Stirring | 70 |
| Example 5 | Sn-3%Ag-0.5%Cu | 2∼12 | N-Methylpyrrolidone +additive | Ultrasonic Waves + Stirring | 70 |
| Example 6 | Pb-63%Sn | 2∼12 | 2-Pyrrolidone | Stirring | 60 |
| Example 7 | Pb-63%Sn | 2∼12 | 2- Pyrrolidone | Ultrasonic Waves | 60 |
| Example 8 | Pb-63%Sn | 2∼12 | 2- Pyrrolidone | Ultrasonic Waves + Stirring | 60 |
| Example 9 | Sn-3%Ag-0.5%Cu | 2∼12 | Dimethylsulfoxide | Stirring | 70 |
| Example 10 | Pb-63%Sn | 2∼12 | Propylene Carbonate | Stirring | 60 |
| Example 11 | Pb-63%Sn | 2∼12 | Sulfolane | Stirring | 60 |
| Example 12 | Pb-63%Sn | 2∼12 | γ-Butyrolactone | Stirring | 60 |
| Comparative Example 1 | Sn-3%Ag-0.5%Cu | 2∼12 | Toluene | Stirring | Room Temperature |
| Comparative Example 2 | Sn-3%Ag-0.5%Cu | 2∼12 | Toluene | Stirring | 70 |
| Comparative Example 3 | Sn-3%Ag-0.5%Cu | 2∼12 | Toluene | Ultrasonic Waves + Stirring | 70 |
| Comparative Example 4 | Pb-63%Sn | 2∼12 | Ethyl Acetate | Ultrasonic Waves + Stirring | 55 |

### <Evaluation>

For each solder powder obtained as described above, a carbon concentration gas analysis was performed. Also, the powder was turned into a paste using a commercially available RMA type rosin-based flux with a flux ratio of 10 to 11 mass%, and paste viscosity and thixotropic index at the time were measured. Also, a solder ball test was performed in compliance with JIS Z 3284 and melting properties of the solder powder was confirmed. In addition, a bump was formed by printing on a wafer and reflowing, and the level of voids after the formation was measured.

Carbon concentration of the solder powder was measured by gas analysis using a CSLS-600 manufactured by LECO JAPAN CORPORATION.

Paste viscosity and thixotropic index were measured in compliance with JIS Z 3284 using a viscometer (PCU-205) manufactured by Malcom Co., Ltd.

A solder ball test was performed in compliance with JIS Z 3284. Evaluations were made according to the following 5 grades, and level 4 and level 5 were considered as defects.
Level 1: Solder (powder) was melted, solder became one big ball and no solder balls were present therearound.
Level 2: Solder (powder) was melted, solder became one big ball and 3 or less solder balls with diameters of 75 µm or less were present therearound.
Level 3: Solder (powder) was melted, solder became one big ball, 4 or more solder balls with diameters of 75 µm or less were present therearound, and the solder balls were not lined around in a semi-continuous ring shape.
Level 4: Solder (powder) was melted, solder became one big ball, a number of fine balls were lined,around in a semi-continuous ring shape.
Level 5: None of the above.

Evaluation of the void level was performed by observing voids within bumps using transmitted X-rays, and the number of voids generated per total number of 500 bumps and diameters of the voids was measured. In this case, the diameter of the void is represented as a ratio to the diameter of the bump and the number of voids generated was measured in categories of each of "less than 10%", "greater than or equal to 10% and less than 20%", "greater than or equal to 20% and less than 30%", and "greater than or equal to 30%". The more the large voids with respect to the diameter of the bump are present, it is considered as defects. Voids of greater than or equal to 30% were considered as defects.

For the powders obtained in Examples 1 to 4 and Comparative examples 1 to 3, respectively, carbon gas concentration, viscosity when turned into paste, thixotropic index, solder ball evaluation results, and void evaluation results are shown in Table 2. In the columns represented as the number of voids, "<10%", "10 to 20%", "20 to 30%", ">30%" represent "greater than 0 and less than 10%", "greater than or equal to 10% and less than 20%", "greater than or equal to 20% and less than 30%", and "greater than or equal to 30%" in this order.

**[Table 2]**

| | Carbon Concentration (ppm) | Viscosity of Paste (Pa·s) | Thixotr opic index | Solder Ball (Level) | Number of Voids | | | | |
|---|---|---|---|---|---|---|---|---|---|
| | | | | | None | <10% | 10 to 20% | 20 to 30% | >30% |
| Example 1 | 340 | 230 | 0.62 | 3 | 258 | 182 | 54 | 6 | 0 |
| Example 2 | 310 | 239 | 0.64 | 3 | 292 | 147 | 57 | 4 | 0 |
| Example 3 | 260 | 240 | 0.64 | 3 | 345 | 122 | 30 | 3 | 0 |
| Example 4 | 240 | 244 | 0.65 | 2 | 361 | 115 | 22 | 2 | 0 |
| Example 5 | 230 | 246 | 0.65 | 2 | 263 | 190 | 43 | 4 | 0 |
| Example 6 | 210 | 250 | 0.65 | 2 | 436 | 56 | 7 | 1 | 0 |
| Example 7 | 190 | 252 | 0.65 | 2 | 452 | 43 | 5 | 0 | 0 |
| Example 8 | 170 | 251 | 0.65 | 2 | 471 | 23 | 6 | 0 | 0 |
| Example 9 | 330 | 234 | 0.63 | 3 | 335 | 133 | 27 | 5 | 0 |
| Example 10 | 230 | 245 | 0.63 | 2 | 451 | 41 | 8 | 0 | 0 |
| Example 11 | 200 | 249 | 0.65 | 2 | 436 | 59 | 4 | 1 | 0 |
| Example 12 | 180 | 255 | 0.65 | 2 | 460 | 38 | 2 | 0 | 0 |
| Comparative Example 1 | 520 | 190 | 0.59 | 5 | 192 | 202 | 77 | 20 | 9 |
| Comparative Example 2 | 490 | 199 | 0.60 | 5 | 201 | 219 | 60 | 13 | 7 |
| Comparative Example 3 | 440 | 203 | 0.60 | 5 | 220 | 204 | 51 | 18 | 7 |
| Comparative Example 4 | 410 | 221 | 0.62 | 4 | 153 | 312 | 28 | 5 | 2 |

As is apparent from the results in Table 2, in examples, powders with low carbon concentration and high cleanliness can be obtained. Also, moderately high values of paste viscosity and thixotropic index are maintained and an aggregating property is better than that of comparative examples. Therefore, any variations in bump height when bumps are formed is small and the powders are suitable for flip-chip mounting. Also, a solder joint with little occurrence of large voids and high reliability can be obtained.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

For example, before cleaning using the cleaning agents including at least one of components selected from a group consisting of N-methylpyrrolidone, 2-pyrrolidone, dimethylsulfoxide, propylene carbonate, sulfolane, and γ-butyrolactone, cleaning agents such as those disclosed in patent documents of the related art may be used for cleaning.

## Claims

1. A method for making solder powder comprising:
a powder-forming step in which the solder powder is formed in liquid; and
a cleaning step in which the solder powder obtained from the powder-forming step is cleaned using a solder powder-cleaning agent comprising at least one of the components selected from a group consisting of N-methylpyrrolidone, 2-pyrrolidone, dimethylsulfoxide, propylene carbonate, sulfolane, and γ-butyrolactone.

2. The method for making solder powder according to Claim 1,
wherein the solder powder-cleaning agent further comprises at least one of a stabilizing agent and an additive.

3. The method for making solder powder according to Claim 1 or 2,
wherein, in the cleaning step, a stir cleaning process in which a cleaning liquid including the solder powder-cleaning agent is stirred at 100 to 500 rpm for 5 to 10 minutes and a supernatant liquid-removing process in which the supernatant liquid formed by the mixture being allowed to stand after the stir cleaning process is removed are repeated several times and then, the remaining slurry is immersed in rinsing cleaning liquid, and after the supernatant liquid formed by the mixture being allowed to stand is removed, the resultant is dried and becomes solder powder.

4. The method for making solder powder according to Claim 1 or 2,
wherein, in the cleaning step, an ultrasonic cleaning process in which ultrasonic waves of 25 to 40 kHz and 300 to 600 W are applied to a cleaning liquid including the solder powder-cleaning agent for 5 to 10 minutes and a supernatant liquid-removing process in which the supernatant liquid formed by the mixture being allowed to stand after the ultrasonic cleaning process is removed are repeated several times and then, the remaining slurry is immersed in rinsing cleaning liquid, and after the supernatant liquid formed by the mixture being allowed to stand is removed, the resultant is dried and becomes solder powder.

5. The method for making solder powder according to Claim 1 or 2,
wherein, in the cleaning step, a process in which an ultrasonic cleaning process in which ultrasonic waves of 25 to 40 kHz and 300 to 600 W are applied to a cleaning liquid for 5 to 10 minutes and a stir cleaning process in which a cleaning liquid including the solder powder-cleaning agent is stirred at 100 to 500 rpm for 5 to 10 minutes are performed either consecutively in a certain order or simultaneously, and a supernatant liquid-removing process in which the supernatant liquid formed by the mixture being allowed to stand after the processes is removed is repeated several times and then, the remaining slurry is immersed in rinsing cleaning liquid, and after the supernatant liquid formed by the mixture being allowed to stand is removed, the resultant is dried and becomes solder powder.

## Patentansprüche

1. Verfahren zur Herstellung eines Lötpulvers, umfassend:
einen Pulverbildungsschritt, in dem das Lötpulver in einer Flüssigkeit gebildet wird, und
einen Reinigungsschritt, in dem das aus dem Pulverbildungsschritt erhaltene Lötpulver unter Verwendung eines Lötpulverreinigungsmittels gereinigt wird, das mindestens eine der Komponenten, ausgewählt aus der Gruppe bestehend aus N-Methylpyrrolidon, 2-Pyrrolidon, Dimethylsulfoxid, Propylencarbonat,
Sulfolan und γ-Butyrolacton, umfasst.

2. Verfahren zur Herstellung eines Lötpulvers gemäß Anspruch 1,
worin das Lötpulverreinigungsmittel ferner mindestens eines von einem Stabilisierungsmittel und einem Additiv umfasst.

3. Verfahren zur Herstellung eines Lötpulvers gemäß Anspruch 1 oder 2,
worin in dem Reinigungsschritt ein Rührreinigungsprozess, in dem eine Reinigungsflüssigkeit, die das Lötpulverreinigungsmittel einschließt, bei 100 bis 500 U/min für 5 bis 10 Minuten gerührt wird, und ein Prozess zur Entfernung einer überstehenden Flüssigkeit, in dem die überstehende Flüssigkeit, die durch die nach dem Rührreinigungsprozess stehengelassene Mischung gebildet wurde, entfernt wird, mehrere Male wiederholt werden und dann die zurückbleibende Aufschlämmung in eine Spülreinigungsflüssigkeit getaucht wird und nachdem die überstehende Flüssigkeit, die durch die stehengelassene Mischung gebildet wurde, entfernt wird, das Resultierende getrocknet wird und zu Lötpulver wird.

4. Verfahren zur Herstellung eines Lötpulvers gemäß Anspruch 1 oder 2,
worin in dem Reinigungsschritt ein Ultraschallreinigungsprozess, in dem eine Reinigungsflüssigkeit, die das Lötpulverreinigungsmittel einschließt, mit Ultraschallwellen von 25 bis 40 kHz und 300 bis 600 W für 5 bis 10 Minuten behandelt wird, und ein Prozess zur Entfernung einer überstehenden Flüssigkeit, in dem die überstehende Flüssigkeit, die durch die nach dem Ultraschallreinigungsprozess stehengelassene Mischung gebildet wurde, entfernt wird, mehrere Mal wiederholt werden und dann die zurückbleibende Aufschlämmung in eine Spülreinigungsflüssigkeit getaucht wird und nachdem die überstehende Flüssigkeit, die durch die stehengelassene Mischung gebildet wurde, entfernt wird, das Resultierende getrocknet wird und zu einem Lötpulver wird.

5. Verfahren zur Herstellung eines Lötpulvers gemäß Anspruch 1 oder 2,
worin in dem Reinigungsschritt ein Ultraschallreinigungsprozess, in dem eine Reinigungsflüssigkeit mit Ultraschallwellen von 25 bis 40 kHz und 300 bis 600 W für 5 bis 10 Minuten behandelt wird, und ein Rührreinigungsprozess, in dem eine Reinigungsflüssigkeit, die das Lötpulverreinigungsmittel einschließt, bei 100 bis 500 U/min für 5 bis 10 gerührt wird, entweder nacheinander in einer bestimmten Reihenfolge oder gleichzeitig durchgeführt werden und ein Prozess zur Entfernung einer überstehenden Flüssigkeit, in dem die überstehende Flüssigkeit, die durch die nach den Prozessen stehengelassene Mischung gebildet wurde, entfernt wird, mehrere Male wiederholt wird und dann die zurückbleibende Aufschlämmung in eine Spülreinigungsflüssigkeit getaucht wird und nachdem die überstehende Flüssigkeit, die durch die stehengelassene Mischung gebildet wurde, entfernt wird, das Resultierende getrocknet wird und zu einem Lötpulver wird.

## Revendications

1. Procédé de fabrication d'une poudre à braser comprenant:
une étape de formation de poudre dans laquelle la poudre à braser est formée dans un liquide; et
une étape de nettoyage dans laquelle la poudre à braser obtenue à l'étape de formation de la poudre est nettoyée en utilisant un agent de nettoyage de la poudre à braser comprenant au moins un des composants choisis dans un groupe constitué de la N-méthylpyrrolidone, de la 2-pyrrolidone, du diméthylsulfoxyde, du carbonate de propylène, du sulfolane et de la γ-butyrolactone.

2. Procédé de fabrication d'une poudre à braser selon la revendication 1, dans lequel l'agent de nettoyage de la poudre à braser comprend en outre au moins un agent parmi un agent stabilisant et un additif.

3. Procédé de fabrication d'une poudre à braser selon la revendication 1 ou 2, dans lequel, à l'étape de nettoyage, un procédé de nettoyage sous agitation, dans lequel un liquide de nettoyage comprenant l'agent de nettoyage de la poudre à braser est agité de 100 à 500 tours par minute pendant 5 à 10 minutes, et un procédé d'élimination de liquide surnageant, dans lequel le liquide surnageant formé par le mélange, laissé au repos après le procédé de nettoyage sous agitation, est enlevé, sont répétés à plusieurs reprises et, ensuite, la boue restante est immergée dans un liquide de nettoyage pour rinçage et, après que le liquide surnageant formé par le mélange, laissé au repos, est retiré, le produit résultant est séché et devient la poudre à braser.

4. Procédé de fabrication d'une poudre à braser selon la revendication 1 ou 2, dans lequel, à l'étape de nettoyage, un procédé de nettoyage aux ultrasons dans lequel des ondes ultrasonores de 25 à 40 kHz et 300 à 600 W sont appliquées à un liquide de nettoyage comprenant l'agent de nettoyage de la poudre à braser pendant 5 à 10 minutes, et un procédé d'enlèvement du liquide surnageant dans lequel le liquide surnageant formé par le mélange, laissé au repos après le procédé de nettoyage aux ultrasons, est retiré, sont répétés à plusieurs reprises et, ensuite, la boue restante est immergée dans un liquide de nettoyage pour rinçage et après que le liquide surnageant formé par le mélange, laissé au repos, est éliminé, le produit résultant est séché et devient la poudre à braser.

5. Procédé de fabrication d'une poudre à braser selon la revendication 1 ou 2, dans lequel, à l'étape de nettoyage, un procédé dans lequel un procédé de nettoyage aux ultrasons dans lequel des ondes ultrasonores de 25 à 40 kHz et 300 à 600 W sont appliquées à un liquide de nettoyage pendant 5 à 10 minutes, et un procédé de nettoyage sous agitation dans lequel un liquide de nettoyage comprenant l'agent de nettoyage de la poudre à braser est agité de 100 à 500 tours par minute pendant 5 à 10 minutes, sont effectués soit de façon consécutive dans un certain ordre, soit simultanément, et un procédé d'élimination du liquide surnageant, dans lequel le liquide surnageant formé par le mélange, laissé au repos après les procédés, est enlevé, est répété à plusieurs reprises et, ensuite, la boue restante est immergée dans un liquide de nettoyage pour rinçage et, après que le liquide surnageant formé par le mélange, laissé au repos, est retiré, le produit résultant est séché et devient la poudre à braser.
